# EUROPÄISCHE PATENTSCHRIFT

(11) **EP 2 954 075 B1**
(45) Veröffentlichungstag und Bekanntmachung des Hinweises auf die Patenterteilung: **27.05.2020**
(21) Anmeldenummer: 13826727.3
(22) Anmeldetag: 20.12.2013
(51) Int. Cl.: C21D 9/00, C21D 9/08, C21D 11/00, C21D 1/40, C21D 1/42, C21D 1/667, B21D 7/16

(54) **VERFAHREN UND VORRICHTUNG ZUM THERMISCHEN HÄRTEN EINES METALLISCHEN BAUTEILS**
METHOD AND DEVICE FOR THERMAL HARDENING OF A METAL ARTICLE
PROCÉDÉ ET DISPOSITIF POUR DURCIR THERMIQUEMENT UNE PIÈCE MÉTALLIQUE

(30) Priorität: 05.02.2013 DE 102013001898
(43) Veröffentlichungstag der Anmeldung: 16.12.2015
(73) Patentinhaber: Thermprotec GmbH, 77656 Offenburg (DE)
(72) Erfinder: GAUS, Rainer, 79104 Freiburg im Breisgau (DE)
(74) Vertreter: Heinze, Ekkehard
(86) Internationale Anmeldenummer: PCT/DE2013/200378
(87) Internationale Veröffentlichungsnummer: WO 2014/121778

(56) Entgegenhaltungen:
- EP-A1- 2 397 571
- EP-A1- 2 548 751
- DE-U1-202011 002 452
- JP-A- 2005 002 365
- US-A1- 2002 069 945
- US-A1- 2004 226 632
- US-A1- 2013 000 375

## Beschreibung

### Gebiet der Erfindung

Die Erfindung betrifft ein Verfahren zum thermischen Härten eines metallischen Bauteils.

### Stand der Technik

Es ist bekannt, mechanische Bauteilte in verschiedenartigsten geometrischen Konfigurationen einer thermischen Behandlung zur Verbesserung ihrer mechanischen Eigenschaften zu unterziehen. Beispielsweise müssen Fahrwerksstabilisatoren zum Einstellen der geforderten mechanischen Eigenschaften thermisch gehärtet werden. Häufig erfolgt dieser Prozess erst nach der Formung des Bauteils. Zum Erwärmen der Bauteile wird üblicherweise ein Strom im Bauteil aufgeprägt, der dann zu einer entsprechenden Erwärmung des Bauteils führt. Hierzu werden die Bauteile an den Enden mit Elektroden kontaktiert. Als Stromquellen dienen DC oder auch AC Versorgungen.

Aufgrund der durch das Vorformen reduzierten Querschnittflächen kommt es aber im Bereich der Bögen in der Regel zu Überhitzungen, die den einstellbaren Härteverlauf limitieren und die möglichen Heizzeiten einschränken.

Die Bauteile werden in großen Stückzahlen erzeugt und die Taktzeit für den Prozess ist fest vorgegeben. Man versucht, durch Ausgleichszeiten die Temperaturüberhöhung zu minimieren. Dies verlängert jedoch die Taktzeiten und verringert somit die Produktivität des thermischen Behandlungsverfahrens.

Aus dem Druckschriften US2004/226632A1, DE202011002452U1 und US2002/069945A1 sind jeweils Verfahren/Vorrichtungen zur thermischen Behandlung eines vorab geformten metallischen Bauteils bekannt, bei denen eine induktive oder konduktive Erwärmung und eine Kühlung mit Luft- oder Wasserbrausen erfolgt.

Ein weiteres Verfahren dieser Art ist in der EP2548751A1 offenbart, wobei hier auch eine gezielte Abkühlung ausgewählter Bereiche des entsprechenden Bauteils geleert wird. Der Schwerpunkt dieser Offenbarung liegt allerdings bei einer sinnvoll mit der Trocknung und Härtung einer Beschichtung verknüpften thermischen Behandlung des Bauteils.

Der Erfindung liegt die Aufgabe zugrunde, ein hinsichtlich seiner Produktivität und der Qualität der Verfahrensprodukte verbessertes Verfahren der genannten Art bereitzustellen. Des Weiteren soll eine zur Durchführung eines solchen Verfahrens geeignete Vorrichtung bereitgestellt werden.

### Darstellung der Erfindung

Diese Aufgabe wird in ihrem Verfahrensaspekt gelöst durch ein Verfahren mit den Merkmalen des Anspruchs 1 und in ihrem Vorrichtungsaspekt durch eine Vorrichtung mit den Merkmalen des Anspruchs 7.

Die Erfindung schließt den Gedanken ein, vom bisher verfolgten Konzept eines passiven Temperaturausgleichs zwischen den während des Erwärmungsprozesses heißer werdenden Bogenbereichen mit geringerem Materialquerschnitt und den unverformten Bereichen mit höherem Materialquerschnitt abzugehen und stattdessen eine aktive lokale Beeinflussung der Bauteiltemperatur vorzunehmen.

Sie schließt weiter den Gedanken ein, dieses Konzept durch eine lokale Kühlung der Bogenbereiche während des thermischen Behandlungsprozesses oder (falls ein Vorwärmen vorgesehen ist) unmittelbar vor dessen Beginn auszuführen. Dies kann sowohl bei einer konduktiven bzw. Widerstands-Erwärmung des Bauteils über angeschlossene Elektroden als auch im Falle einer induktiven Erwärmung geschehen.

Erfindungsgemäß ist das vorgeschlagene Verfahren ausgestaltet als Verfahren zum thermischen Härten eines Stahl-Bauteils, wobei das Bauteil weiter bevorzugt ein geformtes Rohr oder ein Stab, insbesondere zum Einsatz als Fahrwerksstabilisator, ist. Die Anwendungen des Verfahrens sind aber hierauf nicht begrenzt; vielmehr ist es beispielsweise auch auf komplexe räumliche Bauteile mit überhitzungsgefährdeten Bereichen mit verringertem Querschnitt anwendbar.

Die Kühlung setzt bei einer mittleren Temperatur zwischen 200°C und 300°C ein, und die Bogenbereiche werden auf ca. Raumtemperatur abgekühlt, und dann wird der Heizprozess ohne weitere Kühlung fortgesetzt.

Bei Ausführungsformen der Erfindung ist vorgesehen, dass zur Kühlung der Bogenbereiche Luftbrausen mit einstellbaren und regelbaren Düsen oder eine einstellbare Wasserbrause mit einstellbaren Düsen verwendet werden und die Kühlleistung durch Veränderung der Luft- oder Wassermenge geregelt wird. Hierbei ist der Begriff "geregelt" nicht notwendigerweise im engeren Sinne eine Rückkopplung, sondern allgemeiner im Sinne einer zeitlichen Änderung des einwirkenden Kühlmittelstromes zu verstehen. Es kann aber auch eine Regelung im engeren Sinne vorgesehen sein, wobei zur Regelung der Kühlleistung beispielsweise ein oder mehrere optische Pyrometer eingesetzt werden.

Den oben genannten und weiteren, weiter unten als "Aspekte der Erfindung" aufgelisteten Verfahrensaspekten entsprechen Vorrichtungsaspekte zweckmäßiger Ausführungen der vorgeschlagenen Vorrichtung.

Unter anderem kann vorgesehen sein, dass neben der eigentlichen Behandlungsstation, die einen Generator und mit dem Generator verbundene und an das erste und zweite Ende des Bauteils anlegbare Elektroden zur Aufprägung eines im Generator erzeugten Stroms auf das Bauteil oder einen Induktor zu dessen induktiver Erwärmung aufweist, weitere, separate Stationen zur Durchführung des vorgeschlagenen Verfahrens vorhanden sind. Speziell können eine Vorwärmstation zum Vorwärmen des Bauteils und/oder eine separate Kühlstation zur Abkühlung der Bogenbereiche vorgesehen sein. Im Falle einer separat vorgesehenen Kühlstation weist die Behandlungsstation keine zusätzlichen Kühlvorrichtungen auf. Alternativ können die Kühlvorrichtungen (Luft- oder Wasserdüsen o.ä.) aber auch innerhalb der Behandlungsstation angeordnet sein.

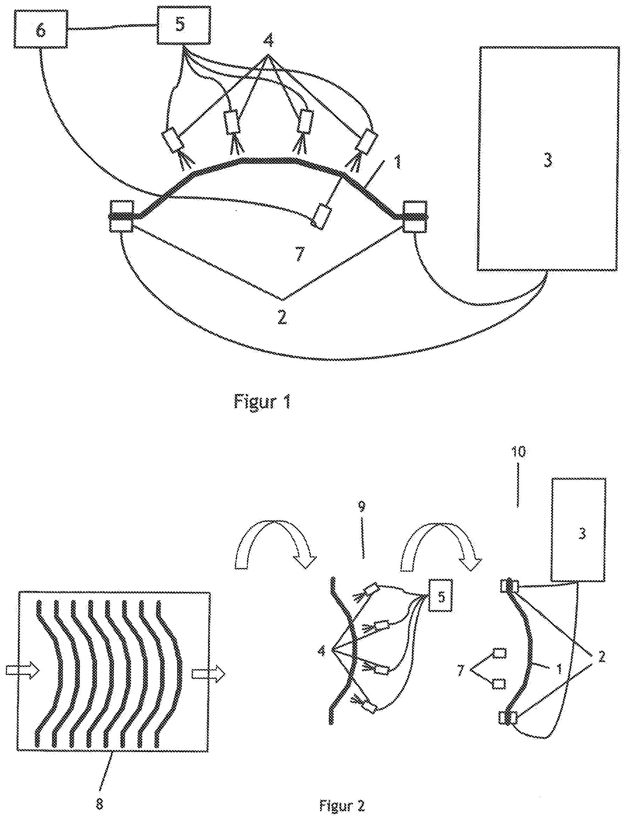

Die Erfindung hat, mindestens in zweckmäßigen Ausführungen, im Übrigen folgende Aspekte:
1. Es handelt sich um ein Verfahren zum Verbessern der Temperaturverteilung von induktiv- bzw. konduktiv beheizten Bauteilen, insbesondere aber nicht ausschließlich von geformten Rohren und Stäben gemäß Figur 1 zur Verwendung als Fahrwerksstabilisatoren, wobei im Bereich der Bögen, aktiv mit Luft- oder Wasserbrausen, während des Heizprozesses, gekühlt wird.
2. Zur Kühlung der lokalen Bereiche werden Luftbrausen mit einstellbaren und regelbaren Düsen eingesetzt.
3. Bei dem Verfahren und der entsprechenden Vorrichtung setzt die Kühlung beim Erreichen der Härtetemperatur ein und erfolgt geregelt bis zur Solltemperatur.
4. Die Kühlung erfolgt während des gesamten Prozesses temperaturgeregelt.
5. Die Kühlleistung wird durch Veränderung der Luft- oder Wassermenge geregelt.
6. Zur Regelung der Kühlleistung werden ein oder mehrere optische Pyrometer eingesetzt.
7. Zur Kühlung werden einstellbare Wasserbrausen mit einstellbaren Düsen verwendet.
8. Das Bauteil wird vor dem konduktiven Erwärmen in einem vorgeschalteten Umluft bzw. Infrarotofen auf ca. 200°C -300°C vorgewärmt.
9. Nach der Vorwärmung wird das Bauteil im Bogenbereich auf Raumtemperatur abgekühlt und anschließend konduktiv bzw. induktiv ohne weitere aktive Kühlung erwärmt.
10. Die Vorwärmung erfolgt in einer separaten Station, und das Bauteil wird erst danach in die eigentliche Erwärmstation gebracht, und der Heizprozess fortgesetzt.

### Kurze Beschreibung der Zeichnungen

Vorteile und Zweckmäßigkeiten der Erfindung ergeben sich im Übrigen aus der nachfolgenden Beschreibung von Ausführungsbeispielen anhand der Figuren. Von diesen zeigen:
Fig. 1 eine Prinzipskizze zur Erläuterung einer erfindungsgemäßen Anordnung und
Fig. 2 eine Prinzipskizze zur Erläuterung eines modifizierten Verfahrensablaufes.

Figur 1 zeigt als Beispiel eines erfindungsgemäß zu behandelnden Bauteils mit verformten Bereichen, in denen der Materialquerschnitt verringert ist, schematisch einen aus einem Stahlrohr vorgeformten Fahrwerksstabilisator 1.

Dieser wird mittels konduktiver Erwärmung auf eine vorbestimmte Temperatur, die für eine vorbestimmte Zeit gehalten wird, thermisch gehärtet.

Die konduktive Erwärmung basiert auf dem elektrischen Widerstandsprinzip. Zu diesem Zweck werden die Enden des Fahrwerkstabilisators 1 mit Elektrodenkontakten 2 verbunden, über die ein im Generator 3 erzeugter Strom aufgeprägt wird. Der spezifische elektrische Widerstand nimmt mit der Temperatur zu. Die Vorwärmung führt somit zu einer Erhöhung des Widerstandes und somit zu einer schnelleren Erwärmung des Bauteils.

Bogenbereiche haben in der Regel jedoch einen geringeren Querschnitt und somit einem höheren elektrischen Widerstand. Dies führt bei herkömmlicher konduktiver Erwärmung zu einem Überhitzen der Bogenbereiche, welches widerum unerwünschte oder jedenfalls nicht exakt definierte mechanische Eigenschaften jener Bereiche zur Folge hat.

Kühlt man nun diesen Bereich gezielt, so reduziert sich der elektrische Widerstand.

Erfolgt dies im korrekten Maße, so dass der absolute Widerstand den geraden Bereichen entspricht, so erfolgt die Erwärmung bis zur Härtetemperatur gleichmäßig und man erreicht eine optimale Härteverteilung beim anschließenden Abkühlen. Die anlagentechnische Ausführung kann auf unterschiedliche Weise erfolgen. So kann die Kühlung mit Luft oder Wasser erfolgen und hier auch durch handelsübliche Komponenten realisiert werden.

Gemäß Fig. 1 werden Düsensysteme mit einstellbaren Düsen 4 eingesetzt. Die Dosierung des Kühlmediums erfolgt über eine Stelleinheit 5 für das Kühlmedium und kann mit präziser Temperaturführung erfolgen. Im Beispiel wird die Temperatur des Bauteils mit einem Pyrometer 7 erfasst und über ein Regelsystem 6 gesteuert.

Fig. 2 zeigt, in Anlehnung an die Darstellung der Fig. 1 und unter Rückgriff auf die dort bereits verwendeten Bezugsziffern, einen beispielhaften Verfahrensablauf in einer modifizierten Anlage. Hierin werden durch eine vorgeschaltete Erwärmung die Bauteile 1 partiell oder gesamt auf eine Temperatur von ca.

200°C bis 300°C gebracht. Dies erfolgt in einem handelsüblichen, konventionellen Umluft oder Infrarotofen 8.

Besonders einfach ist die Prozesssteuerung, wenn die Abkühlung (wie oben beschrieben) im Bogenbereich auf Raumtemperatur erfolgt, da dann kein temperaturgeregelter Prozess erforderlich ist. Dies kann gemäß Fig. 2 in einer separaten Kühlstation 9 erfolgen. In diesem Falle wird eine separate Härtestation 10 eingesetzt, die dann nicht notwendigerweise zusätzliche Kühlvorrichtungen besitzt. Alternativ kann jedoch die Kühlung zu jedem Zeitpunkt des Prozesses durchgeführt werden. Mit Pyrometern 7 kann die Temperaturabweichung zwischen Bogen und geradem Bereich des Bauteils 1 ermittelt und die Prozessparameter entsprechend eingestellt werden.

Die Ausführung der Erfindung ist nicht auf diese Beispiele beschränkt, sondern ebenso in einer Vielzahl von Abwandlungen möglich, die im Rahmen fachgemäßen Handelns liegen.

## Patentansprüche

1. Verfahren zum thermischen Härten eines vorab geformten metallischen Bauteils, welches ein erstes und zweites Ende und Bogenbereiche aufweist, in denen der Materialquerschnitt verringert ist, mittels konduktiver Erwärmung über an das erste und zweite Ende angelegte Elektroden oder mittels induktiver Erwärmung, wobei das Bauteil während der Erwärmung im Bereich der Bögen mit Luft- oder Wasserbrausen aktiv gekühlt wird, wobei die Kühlung bei einer mittleren Temperatur zwischen 200°C und 300°C einsetzt und die Bogenbereiche geregelt auf Raumtemperatur abgekühlt werden und dann die Erwärmung ohne weitere Kühlung fortgesetzt wird.

2. Verfahren nach Anspruch 1, wobei das Bauteil ein geformtes Rohr oder ein Stab, insbesondere zum Einsatz als Fahrwerksstabilisator, ist.

3. Verfahren nach einem der vorangehenden Ansprüche, wobei zur Kühlung der Bogenbereiche Luftbrausen mit einstellbaren und regelbaren Düsen oder eine einstellbare Wasserbrause mit einstellbaren Düsen verwendet werden und die Kühlleistung durch Veränderung der Luft- oder Wassermenge geregelt wird.

4. Verfahren nach einem der vorangehenden Ansprüche, wobei zur Regelung der Kühlleistung ein oder mehrere optische Pyrometer eingesetzt werden.

5. Verfahren nach einem der vorangehenden Ansprüche, wobei das Bauteil vor der konduktiven oder induktiven Erwärmung in einem vorgeschalteten Umluft- oder Infrarotofen auf ca. 200°C -300°C vorgewärmt wird.

6. Verfahren nach Anspruch 5, wobei das Vorwärmen in einer separaten Station einer Behandlungsanlage erfolgt und das Bauteil nach dem Vorwärmen in eine Behandlungsstation überführt wird, in der das thermische Härten unter konduktivem oder induktivem Erwärmen erfolgt.

7. Vorrichtung zur Durchführung des Verfahrens nach einem der vorangehenden Ansprüche, mit
einer Behandlungsstation, die einen Generator und mit dem Generator verbundene und an das erste und zweite Ende des Bauteils anlegbare Elektroden zur Aufprägung eines im Generator erzeugten Stroms auf das Bauteil oder einem Induktor zu dessen induktiver Erwärmung aufweist, und
Kühlvorrichtungen, insbesondere einem Düsensystem mit einstellbaren Düsen zur Ausbringung von Luft oder Wasser als Kühlmedium auf die Bogenbereiche des Bauteils sowie mit einer Stelleinheit zur Dosierung des Kühlmediums,wobei die Stelleinheit mindestens ein Pyrometer zur Erfassung der Temperatur des Bauteils und ein Regelsystem zur Temperaturführung aufweist, welches derart ausgebildet ist, dass die Kühlung beim Erreichen der Härtetemperatur des Materials einsetzt und geregelt bis zu einer vorbestimmten Solltemperatur erfolgt.

8. Vorrichtung nach Anspruch 7, wobei eine Vorwärmstation zum Vorwärmen des Bauteils vorgesehen ist.

## Claims

1. A method for thermally hardening a previously formed metallic component which includes a first and a second end and arc areas, in which the material cross section is reduced, by means of conductive heating via electrodes applied to the first and the second end or by means of inductive heating, wherein the component is actively cooled by air or water showers during the heating in the area of the arcs, wherein the cooling starts at an average temperature of between 200°C and 300°C, and the arc areas are cooled to room temperature in a regulated manner, and then the heating is continued without any further cooling.

2. The method according to claim 1, wherein the component is a shaped tube or a rod, in particular for being used as a chassis stabilizer.

3. The method according to any one of the preceding claims, wherein air showers with adjustable and regulatable nozzles or an adjustable water shower with adjustable nozzles are used for cooling the arc areas, and the cooling power is regulated by changing the air or water amount.

4. The method according to any one of the preceding claims, wherein one or more optical pyrometers are used for regulating the cooling power.

5. The method according to any one of the preceding claims, wherein, prior to the conductive or inductive heating, the component is preheated in an upstream circulating air oven or infrared oven to about 200°C - 300°C.

6. The method according to claim 5, wherein the preheating is performed in a separate station of a treatment plant, and the component is transferred into a treatment station after the preheating, in which the thermal hardening is performed while conductively or inductively heating.

7. A device for executing the method according to any one of the preceding claims, comprising
a treatment station including a generator and electrodes which are connected to the generator and can be applied to the first and the second end of the component for applying a current generated within the generator to the component or an inductor for the inductive heating thereof, and
cooling devices, in particular a nozzle system with adjustable nozzles for ejecting air or water as a cooling medium to the arc areas of the component, as well as an adjusting unit for dosing the cooling medium, wherein the adjusting unit includes at least one pyrometer for detecting the temperature of the component, and a regulating system for the temperature control which is formed such that the cooling starts when the hardening temperature of the material is reached and is performed up to a predetermined specified temperature in a regulated manner.

8. The device according to claim 7, wherein a preheating station is provided for preheating the component.

## Revendications

1. Procédé de durcissement thermique d'un composant métallique préalablement formé qui présente une première et une deuxième extrémité et des zones d'arcs dans lesquelles la section transversale de matériau est réduite, par chauffage par conduction via des électrodes appliquées sur la première et la deuxième extrémité ou par chauffage par induction, sachant que le composant est refroidi activement dans la zone des arcs au moyen de douches d'air ou d'eau pendant le chauffage, sachant que le refroidissement s'enclenche à une température moyenne entre 200 °C et 300 °C et les zones d'arcs sont refroidies de manière régulée à température ambiante et le chauffage est ensuite poursuivi sans refroidissement supplémentaire.

2. Procédé selon la revendication 1, sachant que le composant est un tube formé ou une barre, en particulier à usage comme stabilisateur de châssis.

3. Procédé selon l'une des revendications précédentes, sachant que pour le refroidissement des zones d'arc, des douches d'air à tuyères réglables et régulables ou une douche d'eau réglable à tuyères réglables sont utilisées et la puissance de refroidissement est régulée par modification de la quantité d'air ou d'eau.

4. Procédé selon l'une des revendications précédentes, sachant que pour la régulation de la puissance de refroidissement, un ou plusieurs pyromètres optiques sont mis en oeuvre.

5. Procédé selon l'une des revendications précédentes, sachant que, avant le chauffage par conduction ou par induction, le composant est préchauffé à env. 200 °C - 300 °C dans un four à air tournant ou un four à infrarouge placé en amont.

6. Procédé selon la revendication 5, sachant que le préchauffage est effectué dans une station séparée d'une installation de traitement et le composant est transféré après le préchauffage dans une station de traitement dans laquelle le durcissement thermique est effectué moyennant chauffage par conduction ou par induction.

7. Dispositif pour l'exécution du procédé selon l'une des revendications précédentes, comprenant
une station de traitement qui présente une génératrice et des électrodes reliées à la génératrice et applicables sur la première et la deuxième extrémité du composant pour imprimer un courant généré dans la génératrice au composant ou un inducteur pour le chauffage par induction de celui-ci, et
des dispositifs de refroidissement, en particulier un système de tuyères à tuyères réglables pour l'éjection d'air ou d'eau comme fluide de refroidissement sur les zones d'arcs du composant ainsi qu'une unité de réglage pour le dosage du fluide de refroidissement, sachant que l'unité de réglage présente au moins un pyromètre pour la saisie de la température du composant et un système de régulation pour le guidage de température, lequel est constitué de telle manière que le refroidissement s'enclenche lors de l'atteinte de la température de durcissement du matériau et s'effectue de manière régulée jusqu'à une température de consigne prédéterminée.

8. Dispositif selon la revendication 7, sachant qu'une station de préchauffage est prévue pour le préchauffage du composant.
